# EUROPEAN PATENT SPECIFICATION

(11) **EP 0 396 779 B1**
(45) Date of publication and mention of the grant of the patent: **28.06.1995**
(21) Application number: 89912500.9
(22) Date of filing: 10.11.1989
(51) Int. Cl.: C04B 35/58, B22D 2/00

(54) **BORON NITRIDE CERAMIC HAVING EXCELLENT RESISTANCE AGAINST FUSING DAMAGE**
BORNITRIDKERAMIK MIT GROSSER BESTÄNDIGKEIT GEGEN SCHMELZSCHÄDEN
CERAMIQUE AU NITRURE DE BORE PRESENTANT UNE EXCELLENTE RESISTANCE CONTRE LES DEGATS DUS A LA FUSION

(30) Priority: 10.11.1988 JP 284868/88
(43) Date of publication of application: 14.11.1990
(73) Proprietor: KABUSHIKI KAISHA KOURANSHA, Saga-ken 844 (JP)
(72) Inventor: NAKASHIMA, Masazumi Kabushiki Kaisha Kouransha, Saga-ken 844 (JP); KURITA, Sumihiko, Kishima-gun Saga-ken 849-23 (JP)
(74) Representative: Silverman, Warren
(86) International application number: JP8901151
(87) International publication number: WO9005122

(56) References cited:
- EP-A- 0 308 873
- EP-A- 0 314 807
- FR-A- 2 193 796
- JP-A- 0 632 858
- JP-A- 1 131 066
- JP-A- 1 252 584
- JP-B- 6 138 152
- US-A- 4 539 300
- PATENT ABSTRACTS OF JAPAN vol. 14, no. 52 (M-0928)30 January 1990 & JP-A-1278944
- DATABASE WPIL Week 8537, Derwent Publications Ltd., London, GB; AN 85-226263 & JP-A-60145963
- DATABASE WPIL Week 8445, Derwent Publications Ltd., London, GB; AN 84-278277 & JP-A-59169982

## Description

The present invention relates to BN-group ceramics which are highly resistant to dissolution in hot melts, such as molten metal and molten glass.

Although the properties of h-BN ceramics include excellent unwettability by hot melts of for example metal and glass, they are produced normally by a hot-press method because they are produced from materials which do not sinter well. Hence they are very expensive, and currently are not in wide-spread use as materials to be contacted by hot melts.

In the manufacture of h-BN ceramics by the hot press method, use is made of B₂0₃-group glasses as binder. These are relatively easily wettable by h-BN ceramics, and hence the binder softens at a high temperature, and furthermore is dissolved out at the surface of the BN-ceramics, leading to considerable loss of high-temperature mechanical strength. There will thus be, overall, dissolution-reaction with hot melt, and this is an additional reason for h-BN ceramics not having found widespread use with hot melts under high-temperature conditions.

Recently, no-pressure or reactant sintered complexes principally consisting of ceramics other than BN, such as Si₃N₄-h-BN, and not containing B₂O₃-group glasses have become known. However, these have lacked the excellent properties such as unwettability, high corrosion-resistance, resistance to thermal shock etc. which are inherently possessed by h-BN. With these sintered complexes, at best resistance to thermal shock can be slightly improved by giving them a small BN component, content. However, currently they still cannot, in general, be utilized with hot melts.

Accordingly, in order to be able to produce BN ceramics having a wide-spread acceptability for use with hot melts while preserving the excellent general properties of the BN ceramics, it has been necessary to develop new materials which essentially contain h-BN component as a principal component and which possess excellent resistance to loss by dissolution, excellent unwettability and excellent resistance to thermal shock.

It is an object of the present invention to provide relatively inexpensive h-BN-group ceramic materials which possess excellent resistance to loss by dissolution when in contact with for example hot melts of metal or glass and which moreover can be produced by means of a no-pressure sintering method.

According to one aspect of the present invention, there is provided a h-BN-group ceramic having excellent resistance to dissolution in a hot melt, characterized by a content of 50 wt. % or more h-BN, and the remainder being constituted by a complex compound consisting of two or more compounds selected from AlN, Si₃N₄, Al₂O₃ and SiO₂ such that the complex compound constitutes at least 1 wt. % and less than 50 wt. % of the ceramic, which ceramic is in the form of a sintered body.

According to a second aspect of this invention, there is provided a sintered h-BN-group ceramic having excellent resistance to dissolution in a hot melt and characterized by a content of 50 wt. % or more of h-BN and the remainder being constituted by a complex compound consisting of two or more compounds selected from AlN, Si₃N₄, Al₂O₃ and SiO₂ to an extent of from 1 to less than 50 wt. % of the ceramic and by one or more compounds selected from AlN, Si₃N₄, Al₂O₃ and SiO₂ and present in a total amount of less than 30 wt. % of the ceramic.

According to a third aspect of this invention, there is provided a h-BN-group ceramic having excellent resistance to dissolution in a hot melt, characterised by a content of 50 wt. % or more h-BN together with at least 1 wt. % and less than 50 wt. % of a complex compound selected from compounds of the formulae Al₆Si₂O₁₃, Si₂Al₃O₇N, Si₃Al_{2.67}O₄N₄, Si₃Al₃O₃N₅, Al₃O₃N or Si₆Al₁₀O₂₁N₄, which ceramic is in the form of a sintered body.

According to a fourth aspect of this invention, there is provided a sintered h-BN-groups ceramic having excellent resistance to dissolution in a hot melt and characterised by a content of 50 wt. % or more of h-BN, at least 1 wt. % and less than 50 wt. % of a complex compound having one of the formulae Al₆Si₂O₁₃, Si₂Al₃O₇N, Si₃Al_{2.67}O₄N₄, Si₃Al₃O₃N₅, Al₃O₃N or Si₆Al₁₀O₂₁N₄, and one or more compounds selected from AlN, Si₃N₄, Al₂O₃ and SiO₂ and present in a total amount of less than 30 wt. % of the ceramic.

It has now been found that:
(1) if a sintered body is made which contains 50 wt. % or more of h-BN and from 1 to less than 50 wt. % of a complex compound consisting of two or more compounds selected from AlN, Si₃N₄, Al₂O₃ and SiO₂, resistance to loss by dissolution when contacted by a hot melt of for example metal or glass is remarkably improved;
(2) if a sintered body is made which contains 50 % or more of h-BN and less than 30 wt. % of a complex compound consisting of two or more compounds selected from AlN, Si₃N₄, Al₂O₃ and SiO₂, mechanical strength is remarkably improved while resistance to loss by dissolution is retained; and
(3) if Al₆Si₂O₁₃, Si₂Al₃O₇N, Si₃Al_{2.67}N₄O₄, Si₃Al₃O₃N₅, Al₃O₃N or Si₆Al₁₀O₂₁N₄, in particular, is present as the aforementioned complex compound, then, in addition to resistance to loss by dissolution, the inherent properties of BN ceramics of unwettability and resistance to thermal shock are markedly improved.

More particulary, it has been found that when the h-BN content is chosen to be 50 wt. % or more according to the present invention, then naturally the other ceramic components will not even amount to 50 wt. %. This means that the properties of these ceramic components do not dominate to the detriment of the properties inherently possessed by h-BN, especially resistance to loss by dissolution and resistance to thermal shock. Accordingly, it is necessary for the upper limit to the amount of the complex compound consisting of two or more compounds selected from AlN, Si₃N4, Al₂O₃ and SiO₂ to be present as a ceramic component other than h-BN to be less than 50 wt. %. The reason why a lower limit to the amount of the aforementioned complex compound of 1 wt. % is specified is because if it is less than 1 wt. %, there is insufficient resistance to loss by dissolution in hot melts of for example metal and glass.

While an inherent property of BN ceramics is excellent resistance to thermal shock, this property will vary depending upon the content of ceramic components other than h-BN. If the h-BN content is 50 wt. % or more, that is, if the content of ceramic components other than h-BN is less than 50 wt. %, then generally, the ceramic product is suitable for use with hot melt without any problems. However, should the ceramic be used for special applications, for example with a hot melt which is at least partly solidified and the ceramics be used in making a member which is to be in contact with solidified melt (for instance, as a joint section between a feed nozzle and a Cu-mould, a lining member of a Cu-mould, a withdrawal nozzle for shaping glass, or the like, preferably the h-BN contact should be 70 wt. % or more and components other than h-BN should be from 1% to less than 30%. Preferably the content of h-BN should be 70-97 wt. % and components other than h-BN should be 3-30 wt. %.

The reason why complexes consisting of two or more compounds selected from AlN, Si₃N₄, Al₂O₃ and SiO2 are chosen as a ceramic component additional to h-BN, is because the ceramics produced currently possess excellent thermal shock properties and unwettability which were not found in the heretofore known h-BN complexes, to say nothing of their excellent resistance to loss by dissolution, especially when the composition of the complex compound is AlSi₂O₁₃ Si₁₂Al₃O₇N, Si₃Al₂.₆₇N₄O₄, Si₃Al₃O₃N₅, Al₃O₃N or Si₆Al₁₀O₂₁N₄, for example 3Al₂O₃.2SiO₂, 2SiO₂.AlN.Al₂O₃, 2SiO₂.2.67AlN.1/3Si₃N₄, AlN.Si₃N₄.Al₂O₃, Al₂O₃.AlN or 6SiO₂.3Al₂O₃.4AlN.

Different complex compounds of such type can be made depending on the manufacturing process, and any such complexes can be used in the sintered h-BN-group ceramics within the above-mentioned range. Indeed, individual components of the complex compound may be contained in the starting material for the ceramic and then sintered in producing the ceramic. Thus, the above-mentioned complex compounds could be produced during the sintering process.

The reason why AlN, Si₃N₄, Al₂O₃ and SiO₂ may be present in addition to the complex component is because even if these are contained in BN as individual components, excellent corrosion resistance is revealed. In any case, depending upon the method of manufacture, they will inevitably be present as impurities in the complex compound in h-BN ceramics according to this invention.

For a better understanding of this invention and to show how the same can be carried into effect, reference will now be made, by way of example only to the accompanying drawings, wherein.

Fig. 1 is a diagram of the relationship between resistance to thermal shock, ΔT and BN content.

Fig. 2 shows for evaluation of corrosion resistance, photographs of a top surface and photographs of a cross-section after crucible melting tests.

Fig. 3-6 are schematic views showing how h-BN ceramics members embodying this invention may be used at locations where hot melts solidify at least partly.

The figures will be discussed further with respect to the following Examples.

### Example 1

Samples Nos. 1-8 were prepared by sintering at ambient pressure at 1,500^{o}C-1,800^{o}C under a N₂ atmosphere, after being moulded into a rod shape by means of a rubber-press, and then machining the rods into pieces of 10 mm diameter and 70 mm length.

The sintered phases of these samples were investigated by X-ray diffraction. Samples Nos. 1-8 were dipped in steel melt (JIS SUS-304) molten at 1,500^{o}C-1,550^{o}C by means of a high-frequency melting furnace, to which 0.02 wt. % Al was added, and held for 0.5 hr. while being rotated at a speed of 60 rpm, and the weight losses of the samples by dissolution were measured.

The results are indicated in Table 1.

**Table 1**

| Composition (%) and Amount of Loss by Dissolution of Ceramics Used. | | | | | | |
|---|---|---|---|---|---|---|
| No | BN Component wt. % | Complex Compound Composition | | Additional Component | | Diameter After Dipping mm |
| | | | wt. % | | wt. % | |
| 1 | 95 | Al₆Si₂O13 | 5 | | 0 | 9.1 |
| 2 | 70 | Al₆Si₂O₁₃ | 30 | | 0 | 9.5 |
| 3 | 60 | Al₆Si₂O₁₃ | 30 | SiO₂ | 10 | 9.0 |
| 4 | 70 | Si₂Al₃O₇N | 15 | | | |
| | | Al₆Si₂O₁₃ | 15 | | 0 | 10.0 |
| 5 | 70 | Si₂Al₃O₇N | 30 | | 0 | 10.0 |
| 6 | 70 | Si₂Al₃O₇N | 15 | | | |
| | | Si₃Al₃O₃N₅ | 15 | | 0 | 9.9 |
| 7 | 70 | Si₂Al₃O₇N | | | | |
| | | Si₃Al₂.₆₇N₄O₄ | 15 | | 0 | 10.0 |
| 8 | 70 | Si₂Al₃O₇N | 15 | AlN | 15 | 10.0 |

The sintered components of Samples Nos. 1-8 were composed of h-BN, a complex compound consisting of two or more compounds selected from the group of (AlN, Si₃N₄, Al₂O₃ and SiO₂) and possibly another compound selected from AlN, Si₃N₄, Al₂O₃ and SiO₂. For every sample the diameter after dipping, and thus the resistance to loss by dissolution was excellent.

### Example 2

Samples Nos. 9-14 were prepared by sintering at ambient pressure at 1,800 ^{o}C under a N₂ atmosphere after moulding into a square rod shape by means of a rubber press, and then machining the rod into pieces 25 mm square and 220 mm in length. The sinter phases of these samples were investigated by X-ray diffraction.

Samples 9-14 were dipped into molten steel (JIS SCR-420) at 1,500-1,568 ^{o}C in a high-frequency melting furnace to which 0.053 wt. % Al was added and held for 3 hr. while being rotated at a speed of 0.33 rps. The amounts lost by dissolution were measured.

The results are indicated in Table 2.

With regard to Samples Nos. 9-13, in every case no loss by dissolution after dipping was observed, and the samples possessed excellent resistant to dissolution-loss. However, Sample No. 14 broke due to thermal stress during the test.

**Table 2**

| Compositions (%) and Amount of Loss by Dissolution of Ceramics Used | | | | |
|---|---|---|---|---|
| No | BN Component wt.% | Complex Compound Component and and Additional Component | | Size After Dipping mm |
| | | | wt.% | |
| 9 | 70 | Al₆Si₂O₁₃ | | |
| | | Si₆Al₁₀O₂₁N₄ | 30 | 25 |
| 10 | 70 | Si₃Al₃O₃N₅ | | |
| | | Si₆Al₁₀O₂₁N₄ | 30 | 25 |
| 11 | 70 | Al₃O₃N, AlN | 30 | 25 |
| 12 | 60 | Al₃O₃N, AlN | 40 | 25 |
| 13 | 50 | Al₃O₃N, AlN | 50 | 25 |
| 14 | 30 | Al₃O₃N, AlN | 70 | -- |

### Example 3

After Samples Nos. 9-14 in Example 2 had been moulded into a pipe shape by means of a rubber press, they were sintered at ambient pressure at 1,800 ^{o}C under a N₂ atmosphere, and then they were machined into pieces 50 mm in inner diameter, 60 mm in outer diameter and 50 mm in length.

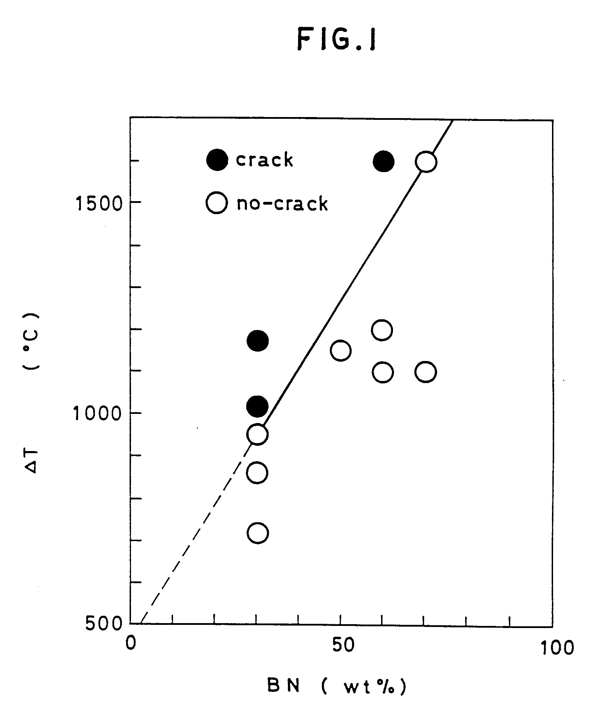

For 30 minutes, these samples were kept at either ambient temperature or at a predetermined temperature not exceeding 900 ^{o}C, and then they were dipped in molten steel at 1,600 ^{o}C for one minute, and resistance to thermal shock was then investigated. The results are indicated in Fig. 1. of the accompanying drawings.

Even when the sample with a h-BN content of 50 wt. % and ΔT which was very high at about 1,300 ^{o}C, and when samples with h-bn content of 70% and Δ T at 1,600 ^{o}C were directly dipped into steel melt at 1,600 ^{o}C, having been previously at ambient temperature, they did not break.

When the h-BN content was 50% or more, resistance to thermal shock as is inherently possessed h-BN does not deteriorate, and even if it is 70 % or more, the ceramics can be used to produce a member to be placed at a location where hot melt would solidify at least partly.

### Example 4

Samples Nos. 15-19 were sintered at ambient pressure at 1,800 ^{o}C under a N₂ atmosphere, after moulded into a crucible shape by means of a rubber press, and then they were machined into the shape of a crucible having an inner diameter of 10 mm and a thickness of about 5 mm.

The sinter layer was investigated by X-ray diffraction, and corrosion resistance was investigated by melting metal (JIS SUS-304) in the crucible produced for one hour at 1,550 ^{o}C under a Ar atmosphere. The results are indicated in Table 3.

**Table 3**

| Composition (%) and Nature of Loss due to dissolution of Ceramics used. | | | | | |
|---|---|---|---|---|---|
| No | BN Component wt. % | Complex Compound Component and Additional Component | wt % | Nature of Loss due to Dissolution | Thermal Exp.Coef RT-700^{o}C X10-⁶ 1/^{o}C |
| 15 | 70 | Al₃O₃N, AlN | 30 | Ⓞ | 4 |
| 16 | 70 | Al₃O₃N, Si₃Al₃O₃N₅ | 30 | Ⓞ | 3-4 |
| 17 | 70 | Si₆Al₁₀O₂₁N₅, Si₃Al₃O₃N₅ | 30 | Ⓞ | 1-2 |
| 18 | 70 | Si₆Al₁₀O₂₁N₅, Si₂Al₆O₁₃ | 30 | Ⓞ | 0-1 |
| 19 | 70 | Si₂Al₆O₁₃ | 30 | ○ | 0-1 |
| Ⓞ Better ○ Good | | | | | |

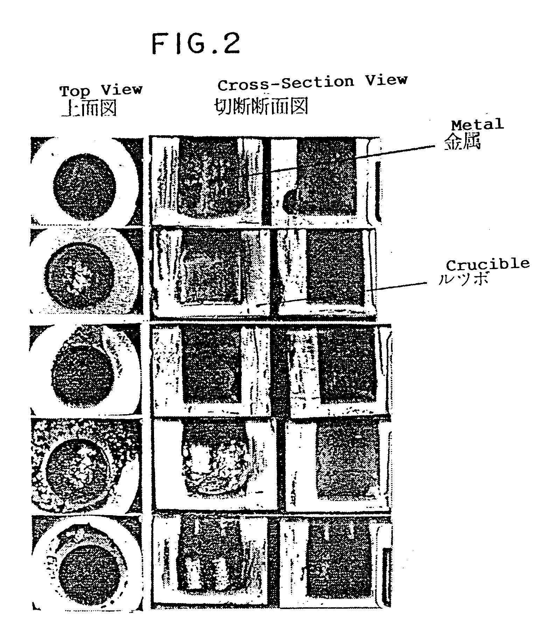

The nature of loss due to dissolution in Table 3 is shown by photographs in Fig. 2.

Were loss due to dissolution to be high, sometimes the crucible inner surface held in contact with the metal would be much enlarged, or holes would be formed in the crucible wall.

Every one of Samples Nos. 15-19 had excellent resistance to loss due to dissolution.

### Example 5

Samples Nos. 15-19 in Table 3 were used to produce a withdrawing nozzle for use in production of shaped glass.

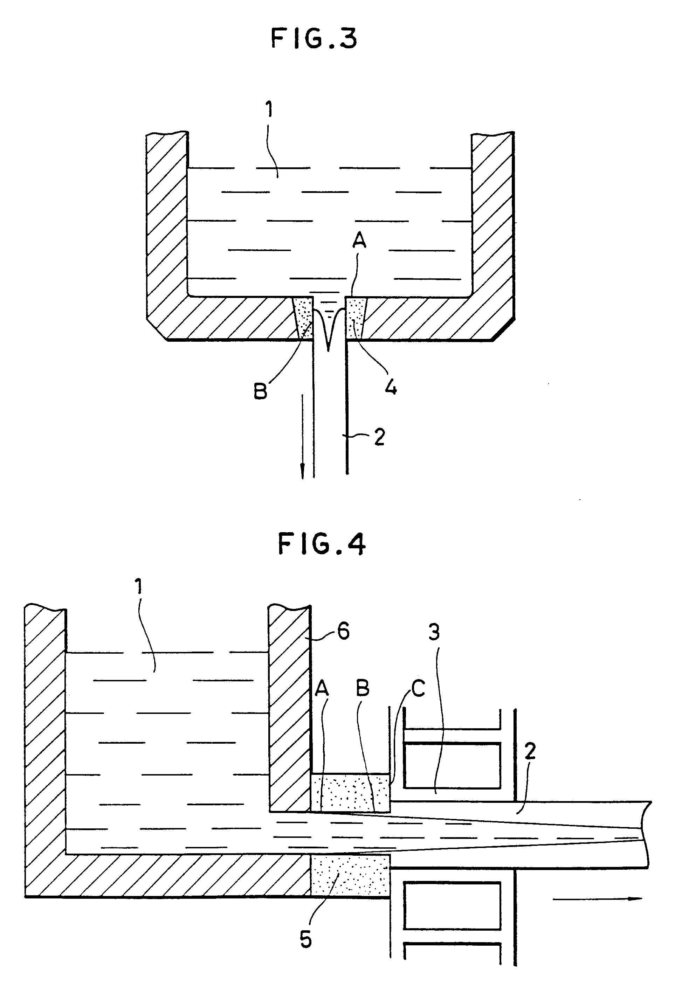

A schematic view of glass for moulding is shown in Fig. 3, and the following description is made with reference to Fig. 3.

Hot melt 1 begins to solidify from the inside of a nozzle (location B in the figure), and a solidified body 2 is withdrawn, shaped according to the nozzle inner surface configuration (in the direction of an arrow in the figure). Accordingly, the nozzle inner surface (location B in the figure) has a temperature lower than solidifying temperature. On the other hand, nozzle 4 is also partly in contact with the hot melt 1, too, at location A in the figure, and the location A has a temperature higher than the inner surface B. In other words, nozzle 4 is held in contact with two phases of a hot melt phase and a solidified phases, and a large temperature difference occurs within the nozzle. Consequently, in addition to having resistance to loss due to dissolution, the nozzle material must have excellent thermal shock resistance and thermal stress resistance.

For use as the nozzle 4, sinters of Samples Nos. 15-19 having an inner diameter of 17.5 mm, an outer diameter of 27 mm and a length of 20 mm were produced, SO₂ group glass was used as the hot melt, and when the hot molten glass was withdrawn at a temperature of about 1,400 ^{o}C, a glass shaped body having no cracks and of excellent quality was obtained.

### Example 6

Samples Nos. 18 and 19 were made up as a brake ring in a horizontal continuous casting machine.

In Fig. 4 there is shown a schematic view of a horizontal continuous casting machine, and in the following description, reference is to made to Fig. 4.

As shown in Fig. 4, a brake ring 5 is a member for connecting a tundish 6 with a water-cooled Cu-mold 3. The machine is designed in such manner that hot melt 1 within the tundish may have its heat removed by the water-cooled Cu-mold 3 and solidification may commence from the brake ring 5 (location B in this figure). Accordingly, the brake ring 5 is held in contact with two phases, that is with a hot melt phase at location B. Furthermore, the brake ring 5 is held in contact also with the water-cooled Cu-mold 3 at location C in the figure, and a temperature gradient in the brake ring member of as much as 1,500 ^{o}C results. Consequently, the brake ring member needs, besides corrosion resistivity, excellent resistance to thermal shock and thermal stress.

A solidified body 2 is withdrawn continuously following the shape of the Cu-mold 3 (in the direction of the arrow in the figure) as it is thus cast. When casting of steel melt (JIS SUS-304) having a temperature of about 1,520 ^{o}C by employing a sintered body of Samples Nos. 18 and 19 having an inner diameter 180 mm, an outer diameter of 210 mm and a height of 20 mm as brake ring, the brake ring neither underwent cracking nor showed any deformation. The quality of the cast article was also good.

### Example 7

After BN, AlN, Al₂O₃ and Si₂O₂ had been mixed in predetermined amounts indicated in Table 4 as starting material with h-BN, so that 70 % or more of h-BN were to be present in the sintered body produced therefrom and the sintered body would contained a complex compound of the composition Si₆Al₂O₁₃, the mixture was molded into a crucible shape by means of a rubber press, the molded body was sintered at ambient pressure at 1,500 ^{o}C-1,800 ^{o}C under a N₂ atmosphere, and then it was machined into a crucible of 10 mm inner diameter and about 5 mm in thickness.

The sinter phase obtained was investigated by X-ray diffraction, and performance in respect of loss by dissolution was investigated as in Example 4. The results ore indicated in Table 4.

With Samples Nos. 20 and 21, components Al₂O₃ and SiO₂ reacted with each other during sintering and resulted in a Si₆Al₂O₁₃ phase. With Sample No. 22 oxygen in the BN component and AlN reacted with each other during sintering and resulted in Al₂O₃, and further, Al₂O₃ and SiO₂ reacted with each other, and resulting in Si₆Al₂O₁₃. As described above, with every sample, the sinter composition components other than the h-BN component reacted to produce Si₆Al₂O₁₃, and tests showed excellent resistance to loss by dissolution. In Table 4, there are shown mechanical strength values. While only Sample No. 20 possessed a low mechanical strength, the other samples showed no problems with respect to the mechanical strength values.

**Table 4**

| Starting Material Compositions (%), Sinter Phase and Nature of loss due to dissolution | | | | | | |
|---|---|---|---|---|---|---|
| No | BN Component wt. % | Other Components | | Sinter Complex Compound Components | Nature Loss due to dissolution | Mechanical Strength (1) |
| | | | wt.% | | | |
| 20 | 70 | Al₂O₃ | 10 | Si₆Al₂O₁₃ | ○ | 2≧ |
| | 〈0〉 | SiO₂ | 20 | | | |
| 21 | 70 | Al₂O3 | 10 | Si₆Al₂O₁₃ | Ⓞ | 4-5 |
| | 〈5〉 | SiO₂ | 20 | | | |
| 22 | 70 | AlN | 8 | Si₆Al₂O₁₃ | Ⓞ | 5-6 |
| | 〈8〉 | SiO₂ | 22 | | | |
| 23 | 95 | Si₆Al₂O₁₃ | 5 | Si₆Al₂O₁₃ | Ⓞ | 4-5 |
| | 〈5〉 | | | | | |
| 〈 〉 value is average amount of water insoluble oxygen (%) in BN component | | | | | | |

| | | | | | | |
|---|---|---|---|---|---|---|
| (1) based on ordinary temperature three-point bending tests | | | | | | |

### Example 8

As in Example 4, Samples Nos. 15-19 were prepared in a crucible shape, and resistance to loss by dissolution when in contact with pure Ni and Fe-50%Ni was investigated, maintaining contact for 1 hr. at 1,500 ^{o}C under an Ar atmosphere. As a result, it was proved that both samples had excellent resistance to loss by dissolution.

### Example 9

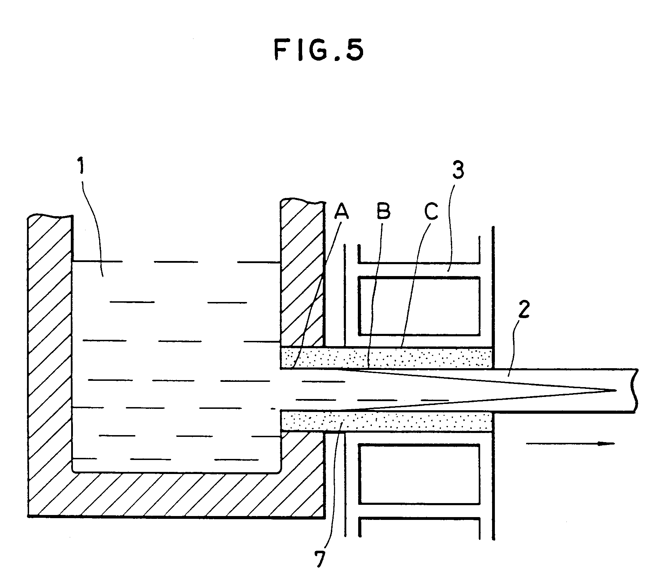

Sample No. 17 in Example 4 was used in producing ceramic mould. A schematic view of the ceramic mould is shown in Fig. 5, and the following description is made with reference to Fig. 5.

A basic structure identical to the horizontal continuous casting machine described in Example 6 was built. The differences between ceramic mould 7 and the brake ring 5 lie in their configurations. The ceramic mould 7 has a configuration such that it covers the entire inner surface of a water-cooled Cu-mould 3, and it thus acts as a mould in determining the shape of solidified body 2.

The ceramic mould 7 is also held in contact with hot melt 1 at location A in the figure and with the solidified body at location B in the figure. In addition, it is also held in contact with the water-cooled Cu-mould at location C in the figure, and so, as mould material, needs to have similar properties to those of the brake ring.

When the sintered body made from Sample No. 17 having an inner diameter of 20 mm, an outer diameter of 36 mm and a length of 160 mm was used as the ceramic mould 7, Fe-50%Ni was employed as hot melt, and casting was effected at a temperature of about 1,500 ^{o}C, casting could be done without generating any cracking in the ceramic mould.

### Example 10.

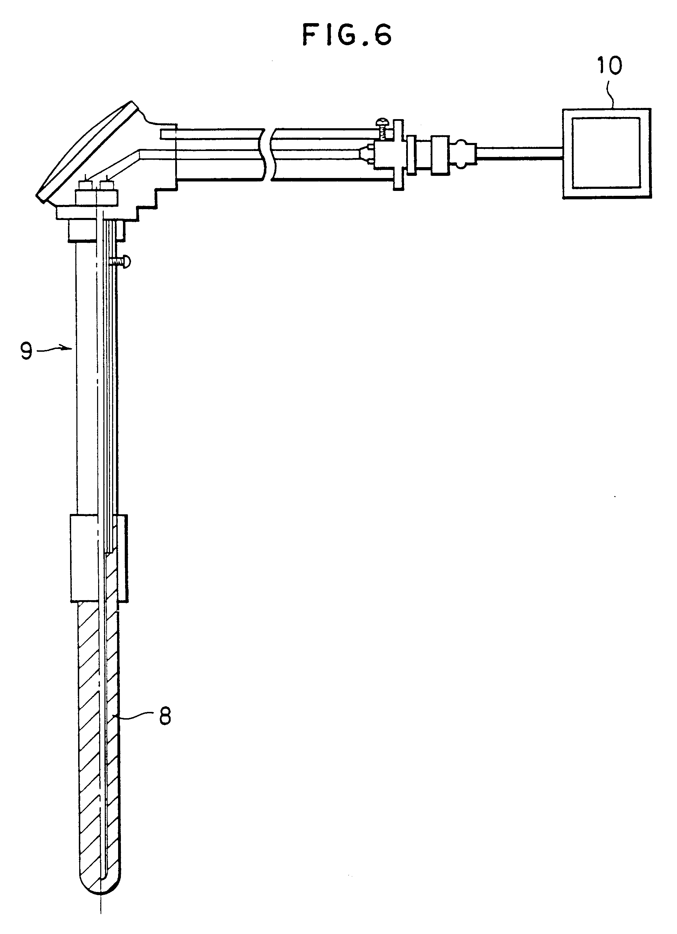

A protective tube was made of Samples Nos. 15-19 in Example 4. It was directly immersed at the upper surface of a steel melt in a tundish and the steel melt temperature within the tundish was measured. A temperature measuring instrument as was used in Fig. 6 was employed. In Fig. 6, hatched portion 8 is the protective tube made of Samples Nos. 15-19, and reference 10 designates a recorder.

As to the results, in every case, the protective tube 8 was not damaged, and the temperature of the steel melt could be measure continuously.

In summary, the BN-group ceramics according to the present invention have excellent resistance to losses by dissolution when in contact with hot melt, they can be produced less expensively by no-pressure sintering, and they can be utilized for making a brake ring, a ceramic mould, a hot melt temperature measuring protective tube or the like in continuous casting machine.

## Claims (Claims for the following Contracting State(s): AT, BE, FR, IT, LU, SE, CH, LI)

1. h-BN-group ceramic having excellent resistance to dissolution in a hot melt, characterized by a content of 50 wt. % or more h-BN, and the remainder being constituted by a complex compound consisting of two or more compounds selected from AlN, Si₃N₄, Al₂O₃ and SiO₂ such that the complex compound constitutes at least 1 wt. % and less than 50 wt. % of the ceramic, which ceramic is in the form of a sintered body.

2. Sintered h-BN-group ceramic having excellent resistance to dissolution in a hot melt and characterized by a content of 50 wt. % or more of h-BN and the remainder being constituted by a complex compound consisting of two or more compounds selected from AlN, Si₃N₄, Al₂O₃ and SiO₂ to an extent of from 1 to less than 50 wt. % of the ceramic and by one or more compounds selected from AlN, Si₃N₄, Al₂O₃ and SiO₂ and present in a total amount of less than 30 wt. % of the ceramic.

3. Ceramic as claimed in Claim 1 or 2, wherein said complex compound is Al₆Si₂O₁₃, Si₂Al₃O₇N, Si₃Al_{2.67}O₄N₄, Si₃Al₃O₃N₅, Al₃O₃N or Si₆Al₁₀O₂₁N₄.

4. Ceramic as claimed in Claim 1 or 2, wherein said complex compound is Al₆Si₂O₁₃, Si₃Al₃O₃N₅, Al₃O₃N or Si₆Al₁₀O₂₁N₄, and is formed into a shaped body to come into contact with a partly solidified phase of a hot melt.

5. A ceramic protective tube for measuring a hot melt temperature which is a h-BN-group ceramic as claimed in Claim 1, 2 or 3 wherein said complex compound is Al₆Si₂O₁₃, Si₃Al₃O₃N₅, Al₃O₃N or Si₆Al₁₀O₂₁N₄.

6. h-BN-group ceramic having excellent resistance to dissolution in a hot melt, characterised by a content of 50 wt. % or more h-BN together with at least 1 wt. % and less than 50 wt. % of a complex compound selected from compounds of the formulae Al₆Si₂O₁₃, Si₂Al₃O₇N, Si₃Al_{2.67}O₄N₄, Si₃Al₃O₃N₅, Al₃O₃N or Si₆Al₁₀O₂₁N₄, which ceramic is in the form of a sintered body.

7. Sintered h-BN-groups ceramic having excellent resistance to dissolution in a hot melt and characterised by a content of 50 wt. % or more of h-BN, at least 1 wt. % and less than 50 wt. % of a complex compound having one of the formulae Al₆Si₂O₁₃, Si₂Al₃O₇N, Si₃Al_{2.67}O₄N₄, Si₃Al₃O₃N₅, Al₃O₃N or Si₆Al₁₀O₂₁N₄, and one or more compounds selected from AlN, Si₃N₄, Al₂O₃ and SiO₂ and present in a total amount of less than 30 wt. % of the ceramic.

8. Ceramic as claimed in claim 6 or 7, wherein said complex compound is Al₆Si₂O₁₃, Si₃Al₃O₃N₅, Al₃O₃N or Si₆Al₁₀O₂₁N₄, the ceramic being formed into a shaped body to come into contact with a partly solidified phase of a hot melt.

9. A ceramic protective tube for measuring a hot melt temperature which is a h-BN-group ceramic as claimed in claim 6, 7 or 8, wherein said complex compound is Al₆Si₂O₁₃, Si₃Al₃O₃N₅, Al₃O₃N or Si₆Al₁₀O₂₁N₄.

## Claims (Claims for the following Contracting State(s): DE, GB, NL)

1. h-BN-group ceramic having excellent resistance to dissolution in a hot melt, characterized by a content of 50 wt. % or more h-BN, and the remainder being constituted by a complex compound consisting of two or more compounds selected from AlN, Si₃N₄, Al₂O₃ and SiO₂ such that the complex compound constitutes at least 1 wt. % and less than 50 wt. % of the ceramic, which ceramic is in the form of a sintered body.

2. Sintered h-BN-group ceramic having excellent resistance to dissolution in a hot melt and characterized by a content of 50 wt. % or more of h-BN and the remainder being constituted by a complex compound consisting of two or more compounds selected from AlN, Si₃N₄, Al₂O₃ and SiO₂ to an extent of from 1 to less than 50 wt. % of the ceramic and by one or more compounds selected from AlN, Si₃N₄, Al₂O₃ and SiO₂ and present in a total amount of less than 30 wt. % of the ceramic.

3. Ceramic as claimed in Claim 1 or 2, wherein said complex compound is Al₆Si₂O₁₃, Si₂Al₃O₇N, Si₃Al_{2.67}O₄N₄, Si₃Al₃O₃N₅, Al₃O₃N or Si₆Al₁₀O₂₁N₄.

4. Ceramic as claimed in Claim 1 or 2, wherein said complex compound is Al₆Si₂O₁₃, Si₃Al₃O₃N₅, Al₃O₃N or Si₆Al₁₀O₂₁N₄, and is formed into a shaped body to come into contact with a partly solidified phase of a hot melt.

5. A ceramic protective tube for measuring a hot melt temperature which is a h-BN-group ceramic as claimed in Claim 1, 2 or 3 wherein said complex compound is Al₆Si₂O₁₃, Si₃Al₃O₃N₅, Al₃O₃N or Si₆Al₁₀O₂₁N₄.

6. h-BN-group ceramic having excellent resistance to dissolution in a hot melt, characterised by a content of 50 wt. % or more h-BN together with at least 1 wt. % and less than 50 wt. % of a complex compound selected from compounds of the formulae Al₆Si₂O₁₃, Si₂Al₃O₇N, Si₃Al_{2.67}O₄N₄, Si₃Al₃O₃N₅, or Si₆Al₁₀O₂₁N₄, which ceramic is in the form of a sintered body.

7. Sintered h-BN-groups ceramic having excellent resistance to dissolution in a hot melt and characterised by a content of 50 wt. % or more of h-BN, at least 1 wt. % and less than 50 wt. % of a complex compound having one of the formulae Al₆Si₂O₁₃, Si₂Al₃O₇N, Si₃Al_{2.67}O₄N₄, Si₃Al₃O₃N₅, or Si₆Al₁₀O₂₁N₄, and one or more compounds selected from AlN, Si₃N₄, Al₂O₃ and SiO₂ and present in a total amount of less than 30 wt. % of the ceramic.

8. Ceramic as claimed in claim 6 or 7, wherein said complex compound is Al₆Si₂O₁₃, Si₃Al₃O₃N₅, or Si₆Al₁₀O₂₁N₄, the ceramic being formed into a shaped body to come into contact with a partly solidified phase of a hot melt.

9. A ceramic protective tube for measuring a hot melt temperature which is a h-BN-group ceramic as claimed in claim 6, 7 or 8, wherein said complex compound is Al₆Si₂O₁₃, Si₃Al₃O₃N₅, Al₃O₃N or Si₆Al₁₀O₂₁N₄.

## Patentansprüche (Patentansprüche für folgende(n) Vertragsstaat(en): AT, BE, FR, IT, LU, SE, CH, LI)

1. h-BN-Keramik mit ausgezeichneter Beständigkeit gegenüber Auflösung in heißer Schmelze, gekennzeichnet durch 50 Gew.% oder mehr h-BN, wobei sich der Rest zusammensetzt aus einer Komplexverbindung, die aus zwei oder mehreren Verbindungen besteht, ausgewählt aus AlN, Si₃N₄, Al₂O₃ und SiO₂, derart, daß die Komplexverbindung mindestens 1 Gew.% und weniger als 50 Gew.% der Keramik stellt, die als Sinterkörper vorliegt.

2. Gesinterte h-BN-Keramik mit ausgezeichneter Beständigkeit gegenüber Auflösung in heißer Schmelze und gekennzeichnet durch einen Gehalt von 50 Gew.% oder mehr h-BN, wobei sich der Rest zusammensetzt aus einer Komplexverbindung, die aus zwei oder mehreren Verbindungen besteht, ausgewählt aus AlN, Si₃N₄, Al₂O₃ und SiO₂, in einem Umfang von 1 Gew.% bis weniger als 50 Gew.% der Keramik und durch ein oder mehrere Verbindungen, ausgewählt aus AlN, Si₃N₄, Al₂O₃ und SiO₂, die in einer Gesamtmenge von weniger als 30 Gew.% der Keramik vorliegen.

3. Keramik nach Anspruch 1 oder 2, wobei die Komplexverbindung Al₆Si₂O₁₃, Si₂Al₃O₇N, Si₃Al_{2,67}O₄N₄, Si₃Al₃O₃N₅, Al₃O₃N oder Si₆Al₁₀O₂₁N₄ ist.

4. Keramik nach Anspruch 1 oder 2, wobei die Komplexverbindung Al₆Si₂O₁₃, Si₃Al₃O₃N₅, Al₃O₃N oder Si₆Al₁₀O₂₁N₄ ist und zu einem Formkörper geformt ist, so daß er in Kontakt mit einer partiell verfestigten Phase einer heißen Schmelze stehen kann.

5. Keramische Schutzröhre zum Bestimmen der Temperatur einer heißen Schmelze, die eine h-BN-Keramik nach Anspruch 1, 2 oder 3 ist, wobei die Komplexverbindung Al₆Si₂O₁₃, Si₃Al₃O₃N₅, Al₃O₃N oder Si₆Al₁₀O₂₁N₄ ist.

6. h-BN-Keramik mit ausgezeichneter Beständigkeit gegenüber einer Auflösung in einer heißen Schmelze, gekennzeichnet durch einen Gehalt von 50 Gew.% oder mehr h-BN zusammen mit mindestens einem und weniger als 50 Gew.% einer Komplexverbindung, ausgewählt aus Verbindungen der Formeln Al₆Si₂O₁₃, Si₂Al₃O₇N, Si₃Al_{2,67}O₄N₄, Si₃Al₃O₃N₅, Al₃O₃N oder Si₆Al₁₀O₂₁N₄, wobei die Keramik als Sinterkörper vorliegt.

7. Gesinterte h-BN-Keramik mit ausgezeichneter Beständigkeit gegenüber einer Auflösung in einer heißen Schmelze und gekennzeichnet durch einen Gehalt von 50 Gew.% oder mehr h-BN, mindestens 1 Gew.% und weniger als 50 Gew.% einer Komplexverbindung mit einer der Formeln Al₆Si₂O₁₃, Si₂Al₃O₇N, Si₃Al_{2,67}O₄N₄, Si₃Al₃O₃N₅, Al₃O₃N oder Si₆Al₁₀O₂₁N₄ und ein oder mehreren Verbindungen, ausgewählt aus AlN, Si₃N₄, Al₂O₃ und SiO₂, wobei sie in einer Gesamtmenge von weniger als 30 Gew.% der Keramik vorliegt.

8. Keramik nach Anspruch 6 oder 7, wobei die Komplexverbindung Al₆Si₂O₁₃, Si₃Al₃O₃N₅, Al₃O₃N oder Si₆Al₁₀O₂₁N₄ ist, wobei die Keramik als Formkörper geformt ist und in Kontakt mit einer partiell verfestigten Phase einer heißen Schmelze stehen kann.

9. Keramische Schutzröhre zum Bestimmen der Temperatur einer heißen Schmelze, die eine h-BN-Keramik nach Anspruch 6, 7 oder 8 ist, wobei die Komplexverbindung Al₆Si₂O₁₃, Si₃Al₃O₃N₅, Al₃O₃N oder Si₆Al₁₀O₂₁N₄ ist.

## Patentansprüche (Patentansprüche für folgende(n) Vertragsstaat(en): DE, GB, NL)

1. h-BN-Keramik mit ausgezeichneter Beständigkeit gegenüber einer Auflösung in heißer Schmelze, gekennzeichnet durch einen Gehalt von 50 Gew.% oder mehr h-BN, wobei der Rest gebildet wird von einer Komplexverbindung, bestehend aus zwei oder mehr Verbindungen aus AlN, Si₃N₄, Al₂O₃ oder SiO₂, derart, daß die Komplexverbindung mindestens 1 Gew.% und weniger als 50 Gew.% der Keramik bildet, wobei die Keramik als Sinterkörper vorliegt.

2. Gesinterte h-BN-Keramik mit ausgezeichneter Beständigkeit gegenüber Auflösung in heißer Schmelze und gekennzeichnet durch einen Gehalt von 50 Gew.% oder mehr h-BN, wobei der Rest gebildet wird von einer Komplexverbindung, bestehend aus zwei oder mehr Verbindungen, ausgewählt aus AlN, Si₃N₄, Al₂O₃ und SiO₂, in einer Menge von 1 bis weniger als 50 Gew.% der Keramik, wobei ein oder mehrere Verbindungen ausgewählt sind aus AlN, Si₃N₄, Al₂O₃ und SiO₂ und in einer Gesamtmenge vorliegen von weniger als 30 Gew.%, bezogen auf die Keramik.

3. Keramik nach Anspruch 1 oder 2, wobei die Komplexverbindung ist: Al₆Si₂O₁₃, Si₂Al₃O₇N, Si₃Al_{2,67}O₄N₄; Si₃Al₃O₃N₅, Al₃O₃N oder Si₆Al₁₀O₂₁N₄.

4. Keramik nach Anspruch 1 oder 2, wobei die Komplexverbindung ist: Al₆Si₂O₁₃, Si₃Al₃O₃N₅, Al₃O₃N oder Si₆Al₁₀O₂₁N₄, und als Formkörper vorliegt, so daß sie in Kontakt mit einer partiell verfestigten Phase einer heißen Schmelze stehen kann.

5. Keramische Schutzröhre zum Bestimmen der Temperatur einer heißen Schmelze, die eine h-BN-Keramik nach Anspruch 1, 2 oder 3 ist, wobei die Komplexverbindung Al₆Si₂O₁₃, Si₃Al₃O₃N₅, Al₃O₃N oder Si₆Al₁₀O₂₁N₄ ist.

6. h-BN-Keramik mit ausgezeichneter Beständigkeit gegenüber Auflösung in heißer Schmelze, gekennzeichnet durch einen Gehalt von 50 Gew.% oder mehr h-BN zusammen mit mindestens einem Gew.% und weniger als 50 Gew.% einer Komplexverbindung, ausgewählt aus Verbindungen der Formeln Al₆Si₂O₁₃, Si₂Al₃O₇N, Si₃Al_{2,67}O₄N₄, Si₃Al₃O₃N₅ oder Si₆Al₁₀O₂₁N₄, wobei die Keramik als Sinterkörper vorliegt.

7. Gesinterte h-BN-Keramik mit ausgezeichneter Beständigkeit gegenüber Auflösung in heißer Schmelze und gekennzeichnet durch einen Gehalt von 50 Gew.% oder mehr h-BN, mindestens 1 Gew.% und weniger als 50 Gew.% einer Komplexverbindung mit einer der Formeln Al₆Si₂O₁₃, Si₂Al₃O₇N, Si₃Al_{2,67}O₄N₄, Si₃Al₃O₃N₅ oder Si₆Al₁₀O₂₁N₄, und ein oder mehreren Verbindungen, ausgewählt aus AlN, Si₃N₄, Al₂O₃ und SiO₂, und vorliegt in einer Gesamtmenge von weniger als 30 Gew.% der Keramik.

8. Keramik nach Anspruch 6 oder 7, wobei die Komplexverbindung Al₆Si₂O₁₃, Si₃Al₃O₃N₅ oder Si₆Al₁₀O₂₁N₄ ist, wobei die Keramik als Formkörper gebildet ist und in Kontakt mit einer partiell verfestigten Phase einer heißen Schmelze stehen kann.

9. Keramische Schutzröhre zum Bestimmen der Temperatur einer heißen Schmelze, die eine h-BN-Keramik nach Anspruch 6, 7 oder 8 ist, wobei die Komplexverbindung Al₆Si₂O₁₃, Si₃Al₃O₃N₅, Al₃O₃N oder Si₆Al₁₀O₂₁N₄ ist.

## Revendications (Revendications pour l'(les) Etat(s) contractant(s) suivant(s): AT, BE, FR, IT, LU, SE, CH, LI)

1. Céramique du groupe BN-h, présentant une excellente résistance à la dissolution dans une masse fondue chaude, caractérisée par une teneur en BN-h égale ou supérieure à 50% en poids, et le restant étant constitué d'un composé complexe, formé de deux ou plus de deux composés choisis parmi AlN, Si₃N₄, Al₂O₃ et SiO₂, le composé complexe représentant au moins 1% en poids et moins de 50% en poids de la céramique, ladite céramique étant sous la forme d'un corps fritté.

2. Céramique frittée du groupe BN-h, présentant une excellente résistance à la dissolution dans une masse fondue chaude, caractérisée par une teneur en BN-h égale ou supérieure à 50% en poids, le restant étant constitué d'un composé complexe formé de deux ou plus de deux composés choisis parmi AlN, Si₃N₄, Al₂O₃ et SiO₂, représentant de 1% à moins de 50% en poids de la céramique, et de 1 ou plusieurs composés choisis parmi AlN, Si₃N₄, Al₂O₃ et SiO₂, présent(s) en une quantité totale représentant moins de 30% en poids de la céramique.

3. Céramique selon la revendication 1 ou 2, dans laquelle ledit composé complexe est Al₆Si₂O₁₃, Si₂Al₃O₇N, Si₃Al_{2,67}O₄N₄, Si₃Al₃O₃N₅, Al₃O₃N ou Si₆Al₁₀O₂₁N₄.

4. Céramique selon la revendication 1 ou 2, dans laquelle ledit composé complexe est Al₆Si₂O₁₃, Si₃Al₃O₃N₅, Al₃O₃N ou Si₆Al₁₀O₂₁N₄, ladite céramique étant mise sous la forme d'un corps façonné, destiné à venir en contact avec une phase partiellement solidifiée d'une masse fondue chaude.

5. Tube protecteur en céramique, pour la mesure de la température d'une masse fondue chaude, qui est constitué d'une céramique du groupe BN-h, telle que revendiquée dans l'une quelconque des revendications 1 à 3, dans laquelle ledit composé complexe est Al₆Si₂O₁₃, Si₃Al₃O₃N₅, Al₃O₃N ou Si₆Al₁₀O₂₁N₄.

6. Céramique du groupe BN-h, présentant une excellente résistance à la dissolution dans une masse fondue chaude, caractérisée par une teneur en BN-h égale ou supérieure à 50% en poids, et par au moins 1% en poids et moins de 50% en poids d'un composé complexe choisi parmi les composés de formule Al₆Si₂O₁₃, Si₂Al₃O₇N, Si₃Al_{2,67}O₄N₄, Si₃Al₃O₃N₅, Al₃O₃N ou Si₆Al₁₀O₂₁N₄, ladite céramique étant sous la forme d'un corps fritté.

7. Céramique frittée du groupe BN-h, présentant une excellente résistance à la dissolution dans une masse fondue chaude, caractérisée par une teneur en BN-h égale ou supérieure à 50% en poids, par au moins 1% en poids et moins de 50% en poids d'un composé complexe ayant l'une des formules Al₆Si₂O₁₃, Si₂Al₃O₇N, Si₃Al_{2,67}O₄N₄, Si₃Al₃O₃N₅, Al₃O₃N et Si₆Al₁₀O₂₁N₄, et par un ou plusieurs composés choisis parmi AlN, Si₃N₄, Al₂O₃ et SiO₂, présent(s) en une quantité totale représentant moins de 30% en poids de la céramique.

8. Céramique selon la revendication 6 ou 7, dans laquelle ledit composé complexe est Al₆Si₂O₁₃, Si₃Al₃O₃N₅, Al₃O₃N ou Si₆Al₁₀O₂₁N₄, la céramique étant mise sous la forme d'un corps façonné, destiné à venir en contact avec une phase partiellement solidifiée d'une masse fondue chaude.

9. Tube protecteur en céramique, pour la mesure de la température d'une masse fondue chaude, qui est constitué d'une céramique du groupe BN-h, telle que revendiquée dans l'une quelconque des revendications 6 à 8, dans laquelle ledit composé complexe est Al₆Si₂O₁₃, Si₃Al₃O₃N₅, Al₃O₃N ou Si₆Al₁₀O₂₁N₄.

## Revendications (Revendications pour l'(les) Etat(s) contractant(s) suivant(s): DE, GB, NL)

1. Céramique du groupe BN-h, présentant une excellente résistance à la dissolution dans une masse fondue chaude, caractérisée par une teneur en BN-h égale ou supérieure à 50% en poids, et le restant étant constitué d'un composé complexe, formé de deux ou plus de deux composés choisis parmi AlN, Si₃N₄, Al₂O₃ et SiO₂, le composé complexe représentant au moins 1% en poids et moins de 50% en poids de la céramique, ladite céramique étant sous la forme d'un corps fritté.

2. Céramique frittée du groupe BN-h, présentant une excellente résistance à la dissolution dans une masse fondue chaude, caractérisée par une teneur en BN-h égale ou supérieure à 50% en poids, le restant étant constitué d'un composé complexe formé de deux ou plus de deux composés choisis parmi AlN, Si₃N₄, Al₂O₃ and SiO₂, représentant de 1% à moins de 50% en poids de la céramique, et de 1 ou plusieurs composés choisis parmi AlN, Si₃N₄, Al₂O₃ and SiO₂, présent(s) en une quantité totale représentant moins de 30% en poids de la céramique.

3. Céramique selon la revendication 1 ou 2, dans laquelle ledit composé complexe est Al₆Si₂O₁₃, Si₂Al₃O₇N, Si₃Al_{2,67}O₄N₄, Si₃Al₃O₃N₅, Al₃O₃N ou Si₆Al₁₀O₂₁N₄.

4. Céramique selon la revendication 1 ou 2, dans laquelle ledit composé complexe est Al₆Si₂O₁₃, Si₃Al₃O₃N₅, Al₃O₃N ou Si₆Al₁₀O₂₁N₄, ladite céramique étant mise sous la forme d'un corps façonné, destinée à venir en contact avec une phase partiellement solidifiée d'une masse fondue chaude.

5. Tube protecteur en céramique, pour la mesure de la température d'une masse fondue chaude, qui est constitué d'une céramique du groupe BN-h, telle que revendiquée dans l'une quelconque des revendications 1 à 3, dans laquelle ledit composé complexe est Al₆Si₂O₁₃, Si₃Al₃O₃N₅, Al₃O₃N ou Si₆Al₁₀O₂₁N₄.

6. Céramique du groupe BN-h, présentant une excellente résistance à la dissolution dans une masse fondue chaude, caractérisée par une teneur en BN-h égale ou supérieure à 50% en poids, et par au moins 1% en poids et moins de 50% en poids d'un composé complexe choisi parmi les composés de formule Al₆Si₂O₁₃, Si₂Al₃O₇N, Si₃Al_{2,67}O₄N₄, Si₃Al₃O₃N₅ ou Si₆Al₁₀O₂₁N₄, ladite céramique étant sous la forme d'un corps fritté.

7. Céramique frittée du groupe BN-h, présentant une excellente résistance à la dissolution dans une masse fondue chaude, caractérisée par une teneur en BN-h égale ou supérieure à 50% en poids, par au moins 1% en poids et moins de 50% en poids d'un composé complexe ayant l'une des formules Al₆Si₂O₁₃, Si₂Al₃O₇N, Si₃Al_{2,67}O₄N₄, Si₃Al₃O₃N₅ et Si₆Al₁₀O₂₁N₄, et par un ou plusieurs composés choisis parmi AlN, Si₃N₄, Al₂O₃ et SiO₂, présents en une quantité totale représentant moins de 30% en poids de la céramique.

8. Céramique selon la revendication 6 ou 7, dans laquelle ledit composé complexe est Al₆Si₂O₁₃, Si₃Al₃O₃N₅ ou Si₆Al₁₀O₂₁N₄, la céramique étant mise sous la forme d'un corps façonné, destiné à venir en contact avec une phase partiellement solidifiée d'une masse fondue chaude.

9. Tube protecteur en céramique, pour la mesure de la température d'une masse fondue chaude, qui est constitué d'une céramique du groupe BN-h, telle que revendiquée dans l'une quelconque des revendications 6 à 8, dans laquelle ledit composé complexe est Al₆Si₂O₁₃, Si₃Al₃O₃N₅, Al₃O₃N ou Si₆Al₁₀O₂₁N₄.
